# EUROPÄISCHE PATENTSCHRIFT

(11) **EP 0 883 253 B1**
(45) Veröffentlichungstag und Bekanntmachung des Hinweises auf die Patenterteilung: **27.09.2000**
(21) Anmeldenummer: 98110883.0
(22) Anmeldetag: 15.06.1998
(51) Int. Cl.: H04B 10/105

(54) **Verfahren und Anordnung zur Optimierung von optischen Intersatellitenverbindungen**
Method and apparatus for optimizing optical intersatellite connections
Procédé et dispositif d'optimisation de connexions optiques entre satellites

(30) Priorität: 01.10.1997 CH 229997
(43) Veröffentlichungstag der Anmeldung: 09.12.1998
(73) Patentinhaber: Contraves Space AG, 8052 Zürich (CH)
(72) Erfinder: Wandernoth, Bernhard, Dr. Ing., 9533 Kirchberg (CH); Fischer, Edgar, Dr. Ing., 8555 Müllheim Dorf (CH)
(74) Vertreter: Hotz, Klaus, Dipl.-El.-Ing./ETH Patentanwalt

(56) Entgegenhaltungen:
- EP-A- 0 325 429
- ASCHMONEIT E K: "OPTISCHE SYSTEME FUER DIE SATELLITEN-KOMMUNIKATION" NTZ NACHRICHTENTECHNISCHE ZEITSCHRIFT, Bd. 46, Nr. 1, 1. Januar 1993, Seiten 30-35, XP000335729
- KENINGTON P B: "ELECTRONIC TRACKING SYSTEMS FOR SPACE COMMUNICATIONS" ELECTRONICS AND COMMUNICATION ENGINEERING JOURNAL, Bd. 2, Nr. 3, 1. Juni 1990, Seiten 95-101, XP000136849
- "LASERSIGNALE IM WELTRAUM" FUNKSCHAU, Bd. 60, Nr. 26, 16. Dezember 1988, Seiten 48-50, 59, XP000030083

## Beschreibung

Die vorliegende Erfindung betrifft ein Verfahren und eine Anordnung zur Optimierung von optischen Intersatellitenverbindungen.

Die optische Freiraum-Kommunikation zwischen Satelliten sowie zwischen Satellit und Bodenstation wird in naher Zukunft an Bedeutung gewinnen, da sie unter anderem an Bord der Satelliten eine gewichtssparende Alternative zur bestehenden Mikrowellentechnik darstellt. Sogenannte optische Terminals bestehen aus einem oder mehreren Teleskopen, welche den Winkelbereich des Gesichtsfeldes eines optischen Empfängers in Richtung einer Gegenstation einschränken sowie für eine gerichtete Abstrahlung der zu sendenden Signale sorgen. Weiterhin sind mehrere bewegliche optische Elemente vorhanden, durch welche die Ausrichtung von Sende- und Empfangsrichtung vorgenommen wird. Neben der direkten Detektion der optischen Leistung des Senders der Gegenstation als Übertragungsverfahren spielt auch die kohärente Überlagerung des empfangenen Lichts mit dem gleichfrequenten Licht eines Lokaloszillator-Lasers eine bedeutende Rolle, da neben einer grossen Empfindlichkeit für das zu detektierende Signal die Unempfindlichkeit für Störungen durch im Hintergrund vorhandene Strahlung ins Gewicht fällt. Der wesentliche Vorteil der Verwendung von Licht als Übertragungsmedium anstelle von Hochfrequenzwellen ist die höhere Systemeffizienz aufgrund der kleineren Wellenlänge (Faktor 10000) und des damit verbundenen höheren Antennengewinns.

Die Hauptschwierigkeit ergibt sich jedoch aus der mit der kleineren Strahldivergenz verbundenen hohen Forderung an die Ausrichtgenauigkeit der Sende- bzw. Empfangsteleskope und an die Präzision sowie die Langzeitstabilität der Mechanismen des optischen Kommunikationsterminals. Darüber hinaus muss wegen der teilweise hohen Relativgeschwindigkeiten der Satelliten ein Vorhaltewinkel zwischen der Ausrichtung von Empfangs- und Sendeteleskop berechnet und exakt eingestellt werden.

Diese Forderungen an Präzision führen zu sehr aufwendigen und teuren Mechanismen, die zur Gewährleistung von Langzeitstabilität in regelmässigen Abständen mit Hilfe gesonderter Vorrichtungen nachjustiert werden müssen. Ausserdem ist seitens der Sendeleistung eine hohe Sicherheitsmarge zu fordern. Dies führt zu hoher Systemkomplexität, hohen Kosten und hohem Energiebedarf, so dass die Attraktivität der Verwendung von Licht gegenüber der Hochfrequenztechnologie oft gering ist.

In diesem Zusammenhang wird verwiesen auf die Publikation ***'Optische* Systeme *für die Satellitenkommunikation' von Aschmoneit in der Nachrichtentechnischen Zeitschrift, Band 46, Nr. 1, vom 01.01.93, Seiten 30 bis 35.*** Diese Publikation hat die Kommunikation zwischen gleichen und unterschiedlichen Weltraumterminals sowie zwischen Weltraumterminals und Bodenstationen, u.a. mit optischer Datenübertragung, zum Thema. Beschrieben werden verschiedenen Einrichtungen zur Nutzdaten-Uebertragung und die Verwendung dieser Einrichtungen, insbesondere betreffend Aquisition, Grobausrichtung, Feinausrichtung und Vorhalte-Einrichtung. Auf Fragen von multiplexierten Subkanälen zwischen einem Terminal und einem Gegenterminal sowie von weiteren Einrichtungen der Terminals, welche ausschliesslich der Uebertragung und Verarbeitung von Daten dienen , die zur optimalisierung des Betriebs der Terminals vorgesehen sind, wird nicht eingegangen.

Folglich ist es Aufgabe der im folgenden beschriebenen Erfindung, die erwähnten Nachteile des Standes der Technik zu vermeiden.

Diese Aufgabe wird erfindungsgemäss durch ein Verfahren mit den im Anspruch 1 angegebenen Merkmalen gelöst. Dadurch wird den Terminals die Möglichkeit gegeben, betriebsinterne Daten zu übertragen, die für den Betreiber des Terminals nicht notwendigerweise sichtbar sein müssen, wobei neben terminalinternem Netzwerkmanagement auch der Abgleich und die Kompensation von Alterungen möglich ist.

Das erfindungsgemässe Verfahren bringt den Vorteil mit sich, dass es in vorzüglicher Weise eine Verwendung eines Zusatzkanals gestattet, um
- Kalibrierung und Justierung der optomechanischen Komponenten,
- Frequenzgenauigkeit und Abstimmbereiche der Oszillatoren sowie
- Höhe der Sendeleistung
eines optischen Übertragungsterminals während des Betriebs ständig zu überwachen und zu optimieren. Dadurch wird die Anforderung an Herstellungsgenauigkeit und langsame Alterung über die Lebenszeit deutlich geringer, wobei auch der Leistungsbedarf des Terminals gesenkt werden kann.

Im weiteren überwindet es den Nachteil des Standes der Technik, dass der Satettelitenbetreiber nur mittels Orbitvermessung von Bodenstationen aus die tatsächlichen Flugbahnen seiner Satteliten vermessen und dann nachregeln kann.
Im Gegensatz dazu können beim erfindungsgemässen Verfahren einerseits die Anforderungen an die Genauigkeit der Orbit- und Lagevermessung durch die Bodenstationen geringer und andererseits die tatsächlichen Orbits / Lagedaten wesentlich genauer berechnet und dann auch nachgeführt werden, wenn durch das erfindungsgemässe Verfahren die genaue Entfernung zwischen den Satteliten und darüber hinaus die genaue Ausrichtung ermittelt wurden.

Weitere Einzelheiten, Merkmale und Vorteile der Erfindung ergeben sich nicht nur aus den Ansprüchen und diesen zu entnehmenden Merkmalen -für sich und/oder in Kombination-, sondern auch aus der nachfolgenden Beschreibung eines Ausführungsbeispiels. Es zeigt:
- **Fig. 1**: ein beispielhaftes Blockschaltbild für eine Implementierung der erfindungsgemässen Anordnung im Sendebetriebsmode zwischen zwei Satelliten,
- **Fig. 2**: ein beispielhaftes Blockschaltbild für eine Implementierung der erfindungsgemässen Anordnung im Empfangsbetriebsmode zwischen zwei Satelliten, und
- **Fig. 3**: ein beispielhaftes Blockschaltbild für eine Implementierung einer weiteren Ausgestaltung der erfindungsgemässen Anordnung.

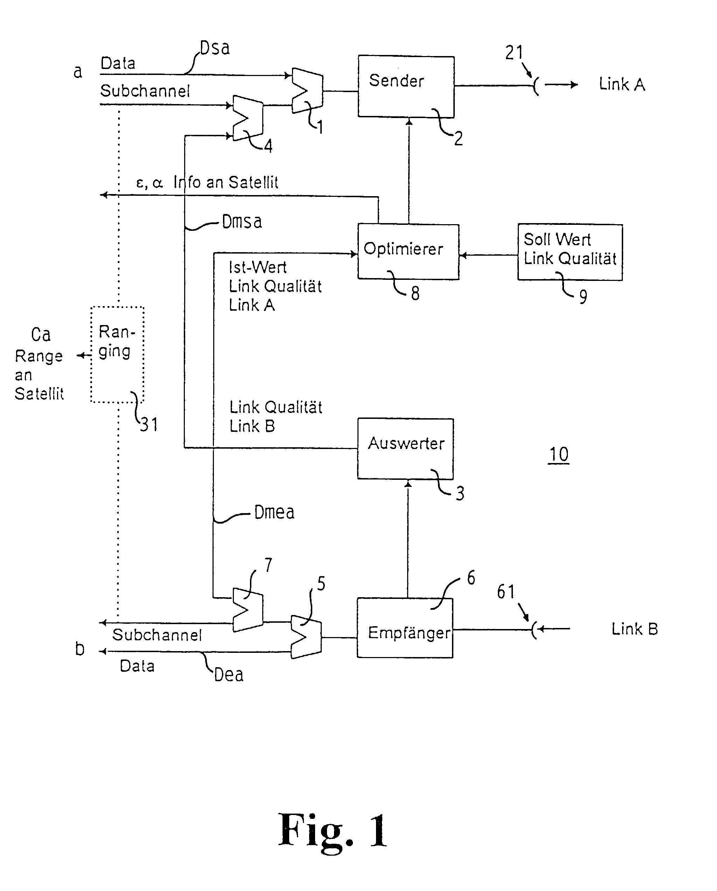

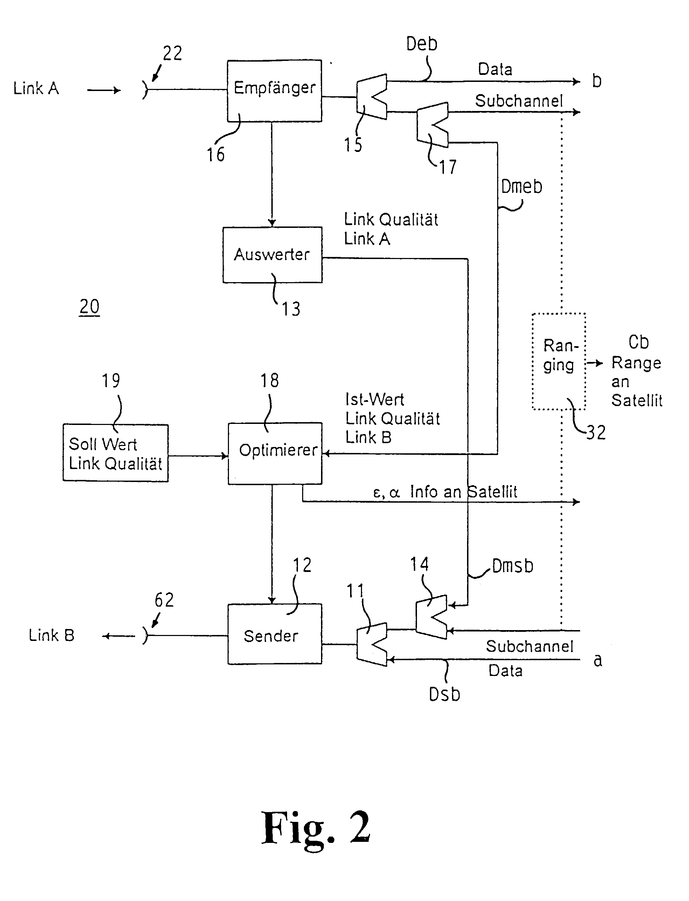

Das Verfahren nach der Erfindung kann beispielsweise mit Hilfe eines Terminals **10** nach **Fig. 1** und eines Gegenterminals **20** nach **Fig. 2** durchgeführt werden. Die Terminals **10** und **20** werden auch erste bzw. zweite Station genannt. Im Terminal **10** ist ein Subkanal-Multiplexer **1** vorhanden, dessen Ausgangssignal einer Sendereinheit **2** zugeführt wird. Eingangsseitig kann der Subkanal-Multiplexer **1** beispielsweise mit mehreren, mit einer grossen Bitrate übertragenen, bereits für sich multiplexierten Nutzdatensignale **Dsa** sowie mit einem Subkanal-Datensignal **Dmsa** beaufschlagt werden, das in einem Auswerter **3** erzeugt und gegebenenfalls über einen zusätzlichen Muliplexer **4** für weitere Subkanalsignale geführt wird. Im Terminal **10** ist auch ein Subkanal-Demultiplexer **5** vorhanden, der eingangsseitig an eine Empfängereinheit **6** angeschlossen ist, und der ausgebildet ist, um ausgangsseitig beispielsweise meherere multiplexierte Nutzdatensignale **Dea** mit grosser Bitrate sowie ein Subkanal-Daten-Signal **Dmea** abzugeben, das gegebenenfalls über einen zusätzlichen weitere Subkanalsignale liefernden Demultiplexer **7** zu einer Optimierungs-Einheit **8** geführt wird, die beispielsweise über einen Bus Steuersignale für die Sendereinheit **2** liefert. Der Auswerter **3** und/oder die Optimierungseinheit **8**, die an einen Sollwertgeber **9** angeschlossen ist, können Mikroprozessoren sein. An die Sendereinheit **2** ist beispielsweise eine erste Antenne (optisches Teleskop) **21** und an die Empfängereinheit 6 eine dritte Antenne (optisches Teleskop) **61** angeschlossen.

Im Gegenterminal **20** ist ein Subkanal-Multiplexer **11** vorhanden, dessen Ausgangssignal einer Sendereinheit **12** zugeführt wird. Eingangsseitig kann der Subkanal-Multiplexer **11** beispielsweise mit mehreren, mit einer grossen Bitrate übertragenen, bereits für sich multiplexierten Nutzdatensignale **Dsb** sowie mit einem Subkanal-Datensignal **Dmsb** beaufschlagt werden, das in einem Auswerter **13** erzeugt und gegebenenfalls über einen zusätzlichen Muliplexer **14** geführt wird. Im Gegenterminal **20** ist auch ein Subkanal-Demultiplexer **15** vorhanden, der eingangsseitig an eine Empfängereinheit **16** angeschlossen ist, und der ausgebildet ist, um ausgangsseitig beispielsweise meherere multiplexierte Nutzdatensignale Deb mit grosser Bitrate sowie ein Subkanal-Daten-Signal **Dmeb** abzugeben, das gegebenenfalls über einen zusätzlichen Demultiplexer **17** einer Optimierungs-Einheit **18** zugeführt wird, die beispielsweise über einen Bus Steuersignale für die Sendereinheit **12** liefert. Der Auswerter **13** und/oder die Optimierungseinheit **18**, die an einen Sollwertgeber **19** angeschlossen ist, können Mikroprozessoren sein. An die Sendereinheit **12** ist beispielsweise eine vierte Antenne (optisches Teleskop) **62** und an die Empfängereinheit **16** eine zweite Antenne (optisches Teleskop) **22** angeschlossen.

Die Optimierung eines vorbestimmten Betriebsparameters im Terminal **10** durch die Anordnungen nach **Fig. 1** und **2**ergibt sich folgendermassen:
Die Datensignale **Dsa** gelangen über den Multiplexer **1** zur Sendereinheit **2** und werden durch das erste optische Teleskop **21** ausgestrahlt. Die entsprechend durch das zweite optische Teleskop **22** und die Empfängereinheit **16** des Gegenterminals empfangenen Datensignale werden im Auswerter **13** behandelt oder ausgewertet, die daher Auswertesignale liefert, die eine Information über die Übertragungsqualität von gesendeten Signalen in Abhängigkeit von einem vorbestimmten Parameter beinhaltet. Solche Parameter können sich beispielsweise auf die Sendeleistung, den Vorhaltewinkel, den Systemabgleich, den Frequenzabgleich usw. beziehen. Die Übertragung von der Sendereinheit 2 zur Empfängereinheit **16** wird mit **"Link A"** bezeichnet.

Die Auswertesignale werden gegebenenfalls über den zusätzlichen Multiplexer **14** dem Subkanaleingang des Subkanal-Multiplexers **11** zugeführt und mit den Nutzdatensignalen zeitlich verschachtelt bzw. multiplexiert über die Sendereinheit **12** und die vierte Antenne (optisches Teleskop) **62** an das Terminal **10** übertragen. Die über die dritte Antenne (optisches Teleskop) **61** und die Empfängereinheit **6** empfangenen Signale werden durch den Demultiplexer **5** demuliplexiert und dem einen Eingang der Optimierungseinheit **8** zugeführt, wo diese Signale mit den Sollwertsignalen des Sollwertgebers **9** verglichen werden, um daraus Steuersignale zu erzeugen, die eine Eigenschaft des Senders bzw. des Terminals **10** beeinflussen, auf die sich jeweils der besagte Parameter bezieht. Die Optimierungs-einheit **8** steuert den Optimierungsprozess iterativ, bis ein gewünschter optimaler Zustand nach einer im voraus bestimmten Vorschrift erreicht wird. Gegebenenfalls können die Signale am Ausgang des Demultiplexers **5** eine weitere Demultiplixierung durch den fakultativen zusätzlichen Demultiplexer **7** erfahren.

Entsprechendes gilt für die Optimierung des jeweiligen Parameters im Terminal **20** durch die Anordnungen nach **Fig. 1** und **2**, da sie eine symmetrische Konfiguration aufweisen, wobei die Überrtragungsstrecke zwischen der Sendereinheit **12** und der Empfängereinheit **6** mit **"Link B"** bezeichnet wird.

Wenn sich der Parameter auf die Sendeleistung des einen Terminals bezieht, erlaubt das erfindungsgemässe Verfahren die Sendeleistung nur auf den momentan im anderen Terminal benötigten Pegel einzustellen. Dazu wird als Betriebsparameter die Empfangsqualität (z.B. anhand der Bitfehlerwahrscheinlichkeit) gemessen und an den Sender übertragen. Auf diese Weise ist eine erhebliche Energieeinsparung und auch eine Lebensdauerverlängerung der optischen Sender erzielbar, wenn man davon ausgeht, dass die Sendeleistung aus Sicherheitsgründen -bei Systemen ohne das erfindungsgemässe Verfahren- bis zu 6 dB über dem tatsächlich erforderlichen Pegel liegt.

Wenn sich der Parameter auf den Vorhaltewinkel (Point Ahead) bezieht, ist zu beachten, dass dann der Vorhaltewinkel des Sendestrahls gegenüber der Empfängerausrichtung ausgerechnet und eingestellt werden muss. Wenn jedoch Sender und Empfänger über den Zusatzkanal Informationen über die Empfangsqualität und Strahlausrichtung austauschen können, kann die Einstellung des Vorhaltewinkels mit einer relativ grossen Toleranz erfolgen, weil nach Verbindungsaufbau der Winkel optimiert werden kann. Hierzu kann die Sendereinheit die Strahlrichtung z. B. periodisch und kreisförmig leicht verändern (Conical Scan), so dass mittels der Information über die Empfangsqualität beim Gegenterminal als Betriebsparameter die Strahlausrichtung optimiert werden kann. Auf diese Weise ist nicht nur die Toleranzanforderung an alle Mechanismen und die Genauigkeitsanforderung an die Strahlausrichtung geringer als ohne dieses Verfahren, es erfolgt auch gleichzeitig eine Kompensation von Alterungen von Mechanismen und winkelbeeinflussenden optischen Elementen. Es werden keine zusätzlichen Stell- oder Sensorelemente benötigt, da diese ohnehin für die Einstellung des Vorhaltewinkels vorhanden sein müssen.

Wenn der Parameter den Systemabgleich betrifft, ist darauf zu achten, dass dann für die exakte Ausrichtung des Teleskopes die optische Justierung aller beteiligten optischen und mechanischen Teile wesentlich ist. Hierzu müssen die Teile nicht nur bei der Herstellung exakt justiert werden, sondern die Justierung muss auch über die gesamte Lebenszeit gewährleistet sein. Dies ist entweder mit sehr aufwendigen konstruktiven Massnahmen oder mit Vorrichtungen zur Vermessung und Nachjustierung, welche die Abschaltung des Terminal-Datenübertragungsmodes bedingt, möglich. Mittels Vermessung der Justierabweichungen (konstruktions- oder alterungsbedingt) über die bestehende Kommunikatonsverbindung auf gleiche Weise, wie beim Vorhaltewinkel beschrieben, kann während des Betriebs ohne die Notwendigkeit der Verbindungsunterbrechung ein ständiger Abgleich erfolgen. Auf diese Weise sind die Anforderungen an die Herstellungsgenauigkeit und an die Alterungsstabilität und damit die Kosten geringer.

Wenn der Parameter den Frequenzabgleich betrifft, muss berücksichtigt werden, dass nahezu ebenso komplex wie die Strahlausrichtung die Frequenzeinstellung bei kohärent-optischen Übertragungssystemen ist. Hier muss der lokale Oszillator im Empfänger exakt der Frequenz des Sendeoszillators nachgeführt werden. Für beide Laser ist ein grosser Abstimmbereich zum Ausgleich von Dopplerverschiebung und Alterungen gefordert. Der Zusatzkanal kann nicht nur für ein netzübergreifendes Frequenzmanagement (Vgl. ***CH***-***Patentanmeldung CH-2307/96*) bzw. EP 0 831 604** genutzt werden, sondern auch zum Überwachen der Grenzen der Abstimmbereiche aller Laser. Falls z.B. der lokale Oszillator an eine Grenze seines 0 Abstimmbereiches gelangt, kann über den Zusatzkanal eine entsprechende Abstimmung des Senderoszillators veranlasst werden. Gegebenenfalls kann so auch ein anderer Frequenzbereich gewählt werden. Durch diese Massnahme ist die Anforderung an eine Kalibrierung und an eine hohe Langzeitstabilität der Laser wesentlich entschärft.

In weiterer Ausgestaltung der Erfindung kann zwischen je einem Subkanal-Anschluss der zusätzlichen Multiplexer **4** und **7** des Terminals **10** bzw. zwischen je einem Subkanal-Anschluss der zusätzlichen Multiplexer **14** und **17** des Terminals **20** jeweils eine sogenannte Ranging-Einheit **31** (**Fig. 1**) bzw. **32** (**Fig. 2**) eingefügt sein, die ein Ranging-Signal **Ca** bzw. **Cb** abgeben. Mit diesem Ranging-Signal kann der Sattelit die Entfernung zum Gegensattelit exakt bestimmen (siehe dazu auch ***CH-Patentanmeldung 2415/96***.bzw. EP 0 834 749)

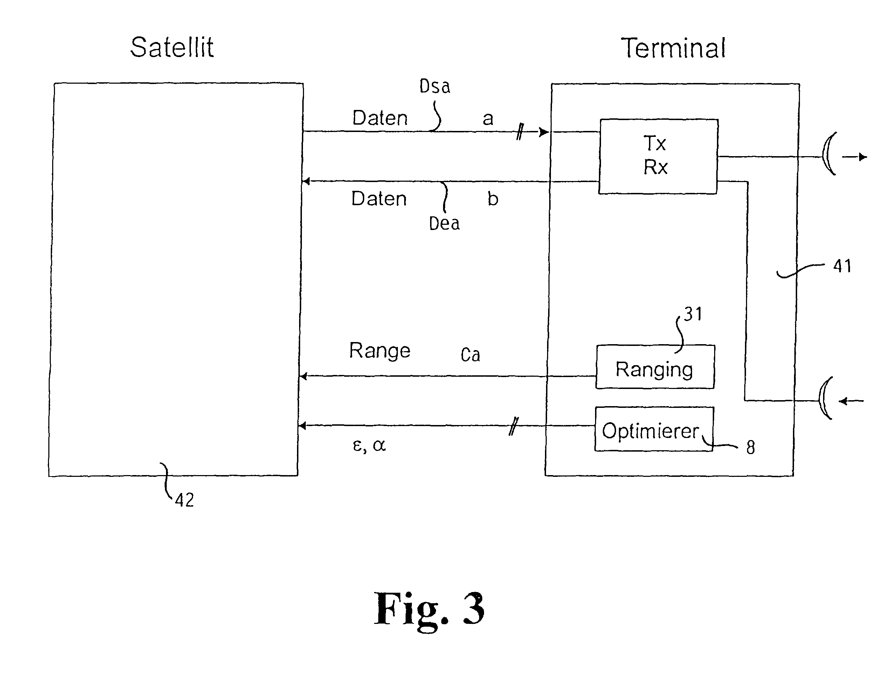

**Fig. 3** zeigt beispielsweise eine schematische Darstellung eines mit einer Ranging-Einheit **31** versehenen Terminals **41**, bei dem der Optimierer **8** auch die Winkel-Grössen ε bzw. α liefert, und wobei das Terminal **20** ähnlich aufgebaut sein kann. Sonst ist vorzugsweise das Terminal **41** gleich dem Terminal **10** nach **Fig. 1. Fig. 3** zeigt auch die Verbindungen zwischen dem Terminal **41** und einem Satelliten-Computer für die Signale ε, α, **Ca, Dsa** und Dea. Solche Signale könnten auch wie im Fall der Patentanmeldung EP 0 834 749 bzw. EP 0 835 000 bzw. EP 0 835 001 behandelt werden.

Mittels der Informationen über die exakte Entfernung -Ranging-Signale- (**Ca, Cb**) und die exakte Ausrichtung (ε, α) ist für den Sattelitennetzwerkbetreiber auf äusserst einfache Art und Weise eine sehr exakte Orbitbestimmung möglich.

Beim vorstehend Beschriebenen handelt es sich lediglich um Ausführungsbeipiele, auf die die Erfindung ausdrücklich nicht beschränkt sein soll, sondern diese sollen auch andere ähnliche Anordnungen mit einschliessen. Insbesondere ist die Erfindung nicht auf digitale Multiplexer/Demultiplexer beschränkt. Dasselbe Prinzip kann beispielsweise auch bei Frequenz-oder Wellenlängen- oder Polarisationsmultiplexierung verwendet werden. Insbesondere könnten die Auswerter auch eine Vorbehandlung von Daten im Hinblick auf eine Auswertung durchführen, wobei dann die jeweilige Optimierungseinheit auch die endgültige Auswertung übernehmen könnte. Eine solche Auswertesignal-Einheit **3** und/oder **13** könnte dann an die Empfängereinheit und/oder an den Ausgang mindestens eines der Multiplxer **5, 7, 15, 17** angeschlossen sein, wobei mit dem Ausdruck Auswertesignal-Einheit auch ein Auswerter bezeichnet wird.

Durch die Erfindung wird der Aufbau von Intersatellitenlinks extrem vereinfacht und beschleunigt und der Aufwand in Bodenstationen geringer als im Stand der Technik. Durch die Anordnung nach **Fig. 3** ist eine hochgenaue Orbitvermessung und Lagebestimmung eines Satelliten möglich.

## Patentansprüche

1. Verfahren zur Optimierung von optischen Intersatellitenverbindungen,
**dadurch gekennzeichnet,**
dass mittels eines zusätzlich zu einem für Nutzdaten vorhandenen Übertragungskanal eingerichteten Zusatzkanals mindestens einem in einem Satelliten vorhandenen Terminal (**10; 20**) die Möglichkeit gegeben wird, betriebsinterne Daten zu übertragen, indem laufend mindestens ein Parameter gemessen wird, um entsprechende Parameterwerte an ein Gegenterminal zu übertragen, und
dass eine Optimierung der Verbindung im Hinblick auf diesen Parameter durchgeführt wird.

2. Verfahren nach Anspruch **1**,
**dadurch gekennzeichnet,**
dass die Sendeleistung des Terminals nur auf den momentan im Gegenterminal benötigten Pegel eingestellt wird, indem als Betriebsparameter die Empfangsqualität im Gegenterminal ausgewertet wird, wobei Signale, die Informationen über die Empfangsqualität beinhaltenm, zurück an das Terminal übertragen werden.

3. Verfahren nach Anspruch **1** oder **2**,
**dadurch gekennzeichnet,**
dass
sich der Betriebsparameter auf den Vorhaltewinkel (Point Ahead) bezieht,
dass Terminal und Gegenterminal über den Zusatzkanal Informationen über die Empfangsqualität und Strahlausrichtung austauschen, derart dass die Einstellung des Vorhaltewinkels mit einer relativ grossen Toleranz erfolgen kann, indem nach Verbindungsaufbau der Winkel optimiert wird, wobei vorzugsweise der Sender des Terminals die Strahlrichtung periodisch und kreisförmig leicht verändert (Conical Scan), so dass mittels der Information über die Empfangsqualität beim Gegenterminal als Betriebsparameter die Strahlausrichtung des Terminals optimiert wird.

4. Verfahren nach einem der Ansprüche **1** bis **3**,
**dadurch gekennzeichnet,** dass
mittels Vermessung von Justierabweichungen über die bestehende Kommunikatonsverbindung während des Betriebs ohne Verbindungsunterbrechungen ein ständiger Abgleich erfolgt.

5. Verfahren nach einem der Ansprüche **1** bis **4**,
**dadurch gekennzeichnet,** dass
der Zusatzkanal für ein netzübergreifendes Frequenzmanagement, und vorzugsweise auch zum Überwachen der Grenzen der Abstimmbereiche von mindestens einem der in einem Satelliten vorhandenen Laser, genutzt wird.

6. Verfahren nach einem der Ansprüche **1** bis **5**,
**dadurch gekennzeichnet,** dass
die Optimierung der verschiedenen Betriebsparameter nacheinander oder zeitlich verschachtelt vorgenommen wird.

7. Anordnung zur Durchführung des Verfahrens nach einem der Ansprüche **1** bis **6**,
**dadurch gekennzeichnet,** dass
mindestens ein Terminal (**10; 20**) vorhanden ist,
dass das Terminal einen ausgangsseitig an eine Sendereinheit (**2; 12**) angeschlossenen Multiplexer (**1; 11**) umfasst, der einen an eine Auswertesignal-Einheit (**3; 13**) angeschlossenen Subkanal-Eingang aufweist, und
dass das Terminal einen eingangsseitig an eine Empfängereinheit (**6; 16**) angeschlossenen Demultiplexer (**5; 15**) umfasst, der einen an eine Optimierungseinheit (**8; 18**) angeschlossenen Subkanal-Ausgang aufweist,
um mittels eines zusätzlich zu dem für Nutzdaten vorhandenen Übertragungskanal durch den Multiplexer bzw. Demultiplexer eingerichteten Zusatzkanals die Möglichkeit zu schaffen, betriebsinterne Daten, die sich auf mindestens einen laufend gemessenen Parameter beziehen, über die Auswertesignal-Einheit (**3; 13**) an die Optimierungseinheit eines Gegenterminals zu übertragen.

8. Anordnung nach Anspruch **7**,
**dadurch gekennzeichnet,** dass
die Optimierungseinheit (**8; 18**) einerseits an einen Sollwertgeber (**9; 19**) und andererseits an die Sendereinheit (**2; 12**) angeschlossen ist, und
dass die Auswertesignal-Einheit (**3; 13**) an die Empfängereinheit (**6**) und/oder an einen Multiplexer (**5; 7; 15; 17**) angeschlossen ist.

9. Anordnung nach Anspruch **7** oder **8**,
**dadurch gekennzeichnet,** dass
dem Multiplexer (**1; 11**) ein zusätzlicher Multiplexer (**4; 14**) vorgeschaltet ist,
dass dem Demultiplexer (**5; 15**) ein zusätzlicher Demultiplexer (**7; 17**) nachgeschaltet ist, und dass zwischen diesem zusätzlicher Multiplexer (**4; 14**) und diesem zusätzlicher Demultiplexer (**7; 17**) eine mit einem Satelliten-Computer (**42**) verbundene Ranging-Einheit (**31; 32**) eingefügt ist.

10. Anordnung nach einem der Ansprüche **7** bis **9**,
**dadurch gekennzeichnet,** dass
die Optimierungseinheit (**8; 18**) an einen Satelliten-Computer (**42**) angeschlossen ist, um ihm Winkelsignale (ε, α) und/oder Ranging-Signale (**Ca, Cb**) zu liefern, womit die Orbitvermessung von Satteliten im Netzwerk beziehungsweise die hochgenaue Lagebestimmung der Satteliten vereinfacht wird.

## Claims

1. Method for optimising optical intersatellite links,
characterised in that
by means of an auxiliary channel established in addition to an existing transmission channel for wanted data, it becomes possible for at least one terminal (10; 20) present in a satellite to transmit internal operating data, by the continual measurement of at least one parameter in order to transmit corresponding parameter values to a partner terminal, and
that optimisation of the link with regard to this parameter is carried out.

2. Method according to claim 1,
characterised in that
the transmitted power of the terminal is only adjusted to the level required instantaneously in the partner terminal by evaluating as the operating parameter the reception quality in the partner terminal; signals containing information about the reception quality are transmitted back to the terminal.

3. Method according to claim 1 or 2,
characterised in that
the operating parameter relates to the point-ahead angle, that the terminal and the partner terminal exchange information about the reception quality and beam pointing via the auxiliary channel, in such a manner that the point-ahead angle can be adjusted with a relatively large tolerance by optimising the angle once the link has been set up, the transmitter of the terminal preferably slightly modifying the beam pointing periodically and in a circle (conical scan), thereby optimising the beam pointing of the terminal by means of the information about reception quality at the partner terminal as the operating parameter.

4. Method according to any of claims 1 to 3,
characterised in that continuous calibration takes place via the existing communication link during operation, without interruptions to the link, by means of the measurement of alignment deviations.

5. Method according to any of claims 1 to 4,
characterised in that
the auxiliary channel is utilised for trans-network frequency management, and preferably also for monitoring the limits of the tuning ranges of at least one of the lasers present in a satellite.

6. Method according to any of claims 1 to 5,
characterised in that
the optimisation of the various operating parameters is performed in succession or in a temporally interleaved manner.

7. Arrangement for implementing the method according to any of claims 1 to 6,
characterised in that
at least one terminal (10; 20) is provided, the terminal includes a multiplexer (1; 11) which is connected on the output side to a transmitter unit (2; 12) and which incorporates a sub-channel input connected to an evaluating signal unit (3; 13), and
the terminal includes a demultiplexer (5; 15) which is connected on the input side to a receiver unit (6; 16) and which incorporates a sub-channel output connected to an optimisation unit (8; 18),
in order, by means of an auxiliary channel established by the multiplexer and demultiplexer, respectively, in addition to the existing transmission channel for wanted data, to create the option of transmitting internal operating data, relating to at least one continually measured parameter, via the evaluating signal unit (3; 13) to the optimisation unit of a partner terminal.

8. Arrangement according to claim 7
characterised in that
the optimisation unit (8; 18) is connected on the one hand to a set-point element (9; 19) and on the other hand to the transmitter unit (2; 12), and
the evaluating signal unit (3; 13) is connected to the receiver unit (6) and/or to a multiplexer (5; 7; 15; 17).

9. Arrangement according to claim 7 or 8,
characterised in that
the multiplexer (1; 11) is preceded by an additional multiplexer (4; 14),
the demultiplexer (5; 15) is followed by an additional demultiplexer (7; 17), and between this additional multiplexer (4; 14) and this additional demultiplexer (7; 17) is inserted a ranging unit (31; 32) linked to a satellite computer (42).

10. Arrangement according to any of claims 7 to 9,
characterised in that
the optimisation unit (8; 18) is connected to a satellite computer (42) in order to supply angle signals (ε, α) and/or ranging signals (Ca, Cb) to it, thereby simplifying the orbit measurement of satellites in the network, and the highly precise positional fixing of the satellites.

## Revendications

1. Procédé d'optimisation de connexions optiques entre satellites, caractérisé en ce qu'on donne à au moins un terminal (10; 20) présent dans un satellite, au moyen d'un canal supplémentaire aménagé en plus d'un canal de transmission prévu pour des données utiles, la possibilité de transmettre des données d'exploitation interne en mesurant en permanence au moins un paramètre pour transmettre des valeurs paramétriques correspondantes à un terminal correspondant, et on effectue une optimisation de la connexion en se basant sur ce paramètre.

2. Procédé selon la revendication 1, caractérisé en ce que la puissance d'émission du terminal n'est réglée qu'au seuil nécessaire momentanément dans le terminal con-espondant en exploitant comme paramètre d'exploitation la qualité de réception dans le terminal correspondant, les signaux, qui contiennent des informations sur la qualité de réception, étant retransmis au terminal.

3. Procédé selon la revendication 1 ou 2, caractérisé en ce que le paramètre d'exploitation se rapporte à l'angle de préséance (Point Ahead), le terminal et le terminal correspondant échangent, par l'entremise du canal supplémentaire, des informations sur la qualité de réception et sur l'alignement du rayonnement de telle sorte que le réglage de l'angle de préséance puisse se faire avec une tolérance relativement grande, en optimisant l'angle après l'établissement de la connexion, de préférence l'émetteur du terminal modifiant la direction du rayonnement périodiquement et en forme de cercle (Conical Scan), de telle sorte que l'alignement du rayonnement du terminal soit optimisé au moyen des informations sur la qualité de réception dans le terminal correspondant comme paramètre d'exploitation.

4. Procédé selon l'une quelconque des revendications 1 à 3, caractérisé en ce que l'on effectue un équilibrage permanent sans interruption de la connexion par mesure des écarts d'ajustement sur la connexion de communication existante en cours d'exploitation.

5. Procédé selon l'une quelconque des revendications 1 à 4, caractérisé en ce que le canal supplémentaire est utilisé pour une gestion des fréquences sur le réseau et, de préférence, également pour contrôler les limites des plages d'accord d'au moins un laser présent dans un satellite.

6. Procédé selon l'une quelconque des revendications 1 à 5, caractérisé en ce que l'optimisation des différents paramètres d'exploitation est réalisée successivement ou imbriquée dans le temps.

7. Dispositif pour réaliser le procédé selon l'une quelconque des revendications 1 à 6, caractérisé en ce qu'il y a au moins un terminal (10;20), le terminal comprend un multiplexeur (1;11) raccordé côté sortie à l'unité émettrice (2;12), ledit multiplexeur présentant une entrée de sous-canal raccordée à l'unité de signaux d'exploitation (3; 13), et le terminal comprend un démultiplexeur (5;15) raccordé côté entrée à une unité réceptrice (6;16), ledit démultiplexeur présentant une sortie de sous-canal raccordée à une unité d'optimisation (8;18), pour offrir, au moyen d'un canal supplémentaire aménagé en plus du canal de transmission présent pour les données utiles par le multiplexeur ou le démultiplexeur, la possibilité de transmettre des données d'exploitation interne, qui se rapportent au moins à un paramètre mesuré en permanence, via l'unité de signaux d'exploitation (3;13) à l'unité d'optimisation d'un terminal correspondant.

8. Dispositif selon la revendication 7, caractérisé en ce que l'unité d'optimisation (8;18) est raccordée, d'une part, à un générateur de point de consigne (9;19) et, d'autre part, à l'unité émettrice (2;12), et l'unité de signaux d'exploitation (3;13) est raccordée à l'unité réceptrice (6) et/ou à un multiplexeur (5;7;15;17).

9. Dispositif selon la revendication 7 ou 8, caractérisé en ce qu'il est prévu en amont du multiplexeur (1;11) un multiplexeur supplémentaire (4;14), en ce qu'il est prévu en aval du démultiplexeur (5;15) un démultiplexeur supplémentaire (7;17) et en ce que, entre ce multiplexeur supplémentaire (4;14) et ce démultiplexeur supplémentaire (7;17), est intercalée une unité de visée (31;32) raccordée à un ordinateur de satellite (42).

10. Dispositif selon l'une quelconque des revendications 7 à 9, caractérisé en ce que l'unité d'optimisation (8;18) est raccordée à un ordinateur de satellite (42) pour lui délivrer des signaux angulaires (ε, α) et/ou des signaux de visée (Ca, Cb), simplifiant ainsi la mesure des orbites des satellites du réseau, respectivement la détermination de position très précise des satellites.
